# EUROPÄISCHE PATENTSCHRIFT

(11) **EP 4 088 357 B1**
(45) Veröffentlichungstag und Bekanntmachung des Hinweises auf die Patenterteilung: **06.03.2024**
(21) Anmeldenummer: 21702657.4
(22) Anmeldetag: 29.01.2021
(51) Int. Cl.: F01K 3/00, F28D 20/02, H01M 10/613, H01M 10/615, H01M 10/627, H01M 10/63, H01M 10/6568, H01M 10/6569, H01M 10/659, H01M 10/66, H02J 3/28, H02J 15/00, F28D 20/00

(54) **NETZSTABILISIERUNG ELEKTRISCHER NETZE MITTELS TEMPERIERTER ELEKTRISCHER SPEICHER**
GRID STABILIZIATION OF ELECTRICAL GRIDS BY MEANS OF TEMPERATURE-CONTROLLED ELECTRICAL STORES
STABILISATION DE RÉSEAU DE RÉSEAUX ÉLECTRIQUES AU MOYEN D'ACCUMULATEURS ÉLECTRIQUES À TEMPÉRATURE RÉGULÉE

(30) Priorität: 20.02.2020 DE 102020104444
(43) Veröffentlichungstag der Anmeldung: 16.11.2022
(73) Patentinhaber: RWE Generation SE, 45141 Essen (DE)
(72) Erfinder: MARSCHEWSKI, Julian, 45141 Essen (DE); IBING, Lukas, 45141 Essen (DE)
(74) Vertreter: Keenway Patentanwälte Neumann Heine Taruttis
(86) Internationale Anmeldenummer: PCT/EP2021/052106
(87) Internationale Veröffentlichungsnummer: WO 2021/165019

(56) Entgegenhaltungen:
- EP-A1- 3 477 764
- CN-A- 107 275 711
- CN-A- 107 394 311
- CN-A- 107 732 369
- CN-A- 110 061 326
- CN-U- 201 466 117
- CN-U- 207 265 123
- DE-A1- 3 934 084
- DE-A1-102009 019 010
- JP-A- 2013 226 012

## Beschreibung

Gegenstand der vorliegenden Erfindung ist ein Verfahren zum Betrieb einer Speichereinrichtung und eine entsprechende Speichereinrichtung. Durch die Speichereinrichtung kann elektrische Energie aus einem Netzwerk reversibel gespeichert werden.

Durch den zunehmenden Anteil von regenerativer Energie wie durch Windkraftanlagen erzeugte elektrische Energie (auch Windenergie) oder durch Fotovoltaikanlagen erzeugte elektrische Energie (auch Sonnenenergie) gestaltet sich die Gewährleistung der Netzstabilität zunehmend schwieriger. Zur Reduktion der Netzfrequenz bei einem Überangebot an elektrischer Energie ist die Speicherung elektrischer Energie beispielsweise in elektrischen Akkumulatoren bekannt. Die gespeicherte elektrische Energie kann zur Erhöhung der Netzfrequenz bei einem Unterangebot an elektrischer Energie in das Netzwerk eingespeist werden. Es wird als bekannt angenommen, dass entsprechende Akkumulatoren temperiert werden müssen, um einen Betrieb der Ackumulatoren in einem vorgebbaren Temperaturbereich zu ermöglichen, wobei diese Energie ebenfalls dem Netzwerk oder dem Akkumulator entnommen wird, so dass bei gegebener Kapazität der Akkumulatoren die Möglichkeit, die Netzfrequenz des Netzwerks zu beeinflussen, unterhalb der eigentlichen Kapazität des Akkumulators liegt. Vorrichtungen zur reversiblen Speicherung von elektrischer Energie sind beispielsweise aus der CN 107 732 369 A, aus der JP 2013 226012 A, aus der EP 3 477 764 A1 und aus der DE 10 2009 019010 A1 bekannt.

Von daher liegt der folgenden Erfindung die Aufgabe zugrunde, die aus dem Stand der Technik bekannten Nachteile zumindest teilweise zu überwinden und insbesondere ein Verfahren zum Betrieb einer Speichereinrichtung und eine entsprechende Speichereinrichtung anzugeben, die eine möglichst effiziente Ausnutzung der elektrischen Speicherkapazität einer Speichereinrichtung zur Beeinflussung der Netzfrequenz ermöglicht.

Diese Aufgabe wird gelöst durch die Merkmale der unabhängigen Ansprüche. Die jeweiligen abhängigen Ansprüche sind auf vorteilhafte Weiterbildlungen gerichtet.

Das erfindungsgemäße Verfahren zum Betrieb einer Speichereinrichtung, die einen ersten elektrischen Speicher zum Speichern und Abgeben elektrischer Energie und einen zweiten thermischen Speicher in einem Speicherkreislauf zum Speichern und Abgeben thermischer Energie umfasst, wobei der erste elektrische Speicher mit mindestens einem Netzwerk zur Übertragung und Verteilung elektrischer Energie zum Speichern elektrischer Energie aus dem Netzwerk und zum Abgeben elektrischer Energie in das Netzwerk aus dem ersten elektrischen Speicher elektrisch verbindbar ist, wobei das Netzwerk einen Netzstatus aufweist, wobei das Netzwerk ein Teil eines Verbundnetzes ist,
wobei in Abhängigkeit vom Netzstatus elektrische Energie aus dem Netzwerk in dem ersten elektrischen Speicher gespeichert oder diesem entnommen und in das Netzwerk eingespeist wird;
in Abhängigkeit vom Netzstatus elektrische Energie aus dem Netzwerk oder dem ersten elektrischen Speicher entnommen, in thermische Energie umgewandelt und diese über den Speicherkreislauf im zweiten thermischen Speicher gespeichert wird; und
in Abhängigkeit zumindest von einer Temperatur des ersten elektrischen Speichers dieser beheizt oder gekühlt wird und die dafür notwendige thermische Energie aus dem zweiten thermischen Speicher, vorzugsweise zusätzlich aus dem Speicherkreislauf, entnommen oder in diesem gespeichert wird.

Das Netzwerk ist bevorzugt ein Wechselspannungs-Netzwerk mit einer definierten Sollnetzfrequenz, die beispielsweise bei 50 Hz [Hertz] oder 60 Hz liegt. Bei der Sollnetzfrequenz handelt es sich um eine Sollfrequenz, die möglichst genau einzuhalten ist. Abweichungen der Netzfrequenz von der Sollnetzfrequenz können zu Problemen im Netzwerk bis zum Ausfall zumindest von Teilen des Netzwerks (einem so genannten Blackout) führen. Durch ein Überangebot von elektrischer Energie im Netzwerk steigt die Netzfrequenz an, durch eine Unterversorgung mit elektrischer Energie sinkt die Netzfrequenz.

Der erste elektrische Speicher ist eine Speichereinrichtung, in der elektrische Energie reversibel gespeichert werden kann, bevorzugt eine elektrochemische Speichereinrichtung. Bevorzugt umfasst die erste elektrische Speichereinrichtung mindestens einen Akkumulator, insbesondere aufgebaut aus einer oder mehreren Speicherzellen, besonders bevorzugt einen Blei-Akkumulator und/oder Lithium-Ionen-Akkumulator.

Der zweite thermische Speicher ist eine Speichereinrichtung, in der thermische Energie reversibel gespeichert werden kann. Hierbei wird die thermische Energie bevorzugt in einem Speichermedium gespeichert, insbesondere einem Latentwärmespeicher und/oder einem Phasenwechselmaterial. Bevorzugt umfasst das Speichermedium eine Mischung aus Wassereis und Wasser. Hierbei wird der Speicherkreislauf bevorzugt von einem Wärmemedium durchströmt, wobei thermische Energie zwischen Wärmemedium und Speichermedium reversibel übertragen werden kann, um thermische Energie im zweiten thermischen Speicher zu speichern oder diesem zu entnehmen.

Im Falle der Kühlung oder Beheizung des ersten elektrischen Speichers wird dieser bevorzugt so temperiert, dass seine Temperatur in einem vorgebbaren Temperaturbereich liegt.

Unter dem Netzstatus wird ein Status verstanden, der den Netzzustand angibt. Hierbei kann es sich bevorzugt um einen Indikator handeln, dass ein Überangebot an elektrischer Energie im Netzwerk vorliegt oder dass eine Unterversorgung an elektrischer Energie vorliegt. Bei einem Überangebot an elektrischer Energie erfolgt dann, wenn möglich, eine Speicherung elektrischer Energie im ersten elektrischen Speicher und/oder eine Umwandlung elektrischer Energie aus dem Netzwerk in thermische Energie zur Speicherung im zweiten thermischen Speicher. Hierdurch sinkt die Netzfrequenz. Bei einer Unterversorgung wird, so möglich, elektrische Energie aus dem ersten elektrischen Speicher in das Netzwerk überführt. Hierdurch steigt die Netzfrequenz. Beide Maßnahmen dienen der Netzstabilisierung.

Nach dem erfindungsgemäßen Verfahren steht die volle Kapazität des ersten elektrischen Speichers zur Stabilisierung des Netzwerkes zur Verfügung, da dann, wenn die Abgabe von elektrischer Energie in das Netzwerk aufgrund des Netzwerkstatus notwendig ist, keine elektrische Leistung aus dem Netzwerk und/oder dem ersten elektrischen Speicher für die Temperierung des ersten elektrischen Speichers notwendig ist. Dies erlaubt einerseits bei einem bestehenden ersten elektrischen Speicher eine bessere Ausnutzung der zur Verfügung stehenden Speicherkapazität für die Netzstabilisierung und andererseits bei einer neuen Auslegung eines ersten elektrischen Speichers die Auslegung eines kleineren elektrischen Speichers bei gleicher für die Netzstabilisierung zur Verfügung stehender Kapazität. Zudem stellt die Umwandlung elektrischer Energie in thermische Energie, die später zur Temperierung des ersten elektrischen Speichers genutzt wird, eine weitere Möglichkeit zur Verfügung, die Regelung der Netzstabilität zu verbessern.

Bevorzugt umfasst das Netzwerk ein Wechselspannungsnetzwerk und der Netzstatus wird zumindest basierend auf der Netzfrequenz im Netzwerk festgelegt. Insbesondere kann der Netzstatus basierend auf der Abweichung der Netzfrequenz von der Sollnetzfrequenz festgelegt werden. Zusätzlich können Prognosen über die Abnahme an elektrischer Energie aus dem Netzwerk und/oder die Einspeisung von elektrischer Energie in das Netzwerk berücksichtigt werden. Die Prognosen können dabei basierend auf historischen Daten und/oder basierend beispielsweise aus Umweltdaten, insbesondere unter Berücksichtigung der Wind- und/oder Sonneneinstrahlungsdaten, erstellt werden. Bevorzugt ist eine Ausgestaltung, bei dem der Netzstatus eine Prognose umfasst, die den voraussichtlich in einem zukünftigen Zeitbereich bestehenden Abgabe- bzw. Einspeisebedarf an elektrischer Energie in das Netzwerk darstellt.

Bevorzugt stellt der der Netzstatus einen Abgabestatus dar, aus dem entnehmbar ist, dass elektrische Energie aus dem Netz abgebbar ist, oder einen Einspeisestatus, aus dem entnehmbar ist, das elektrische Energie in das Netz einzuspeisen ist.

Bevorzugt wird bei der Entscheidung, ob elektrische Energie aus dem ersten elektrischen Speicher entnommen und in das Netzwerk eingespeist wird oder aus dem Netzwerk entnommen und im ersten elektrischen Speicher gespeichert wird, ein elektrisches Ladezustandsprofil des ersten elektrischen Speichers berücksichtigt. Insbesondere kann dann, wenn das elektrische Ladezustandsprofil einen so niedrigen Ladezustand des ersten elektrischen Speichers signalisiert, dass eine vollständige Netzstabilisierung des Netzwerks allein basierend auf der im ersten elektrischen Speicher gespeicherten elektrischen Energie nicht möglich ist, ein entsprechender Hinweis an andere Speichereinrichtungen und/oder einen Netzbetreiber gesendet werden.

Bevorzugt wird bei der Entscheidung, ob elektrische Energie aus dem Netzwerk entnommen, in thermische Energie umgewandelt und diese im zweiten thermischen Speicher gespeichert oder ob die erzeugte thermische Energie direkt zur Temperierung des ersten elektrischen Speichers eingesetzt wird, ein thermischer Ladezustand des zweiten thermischen Speichers berücksichtigt. Insbesondere kann eine Umwandlung von elektrischer Energie in thermische Energie bevorzugt dann erfolgen, wenn ein Überangebot an elektrischer Energie im Netzwerk vorhanden ist und der thermische Ladezustand des zweiten thermischen Speichers eine niedrige Aufladung signalisiert.

Bevorzugt umfasst der zweite thermische Speicher als Speichermedium ein Phasenwechselmedium, insbesondere umfassend Wasser, Paraffine, Salzhydrate und/oder ionischen Flüssigkeiten. Bevorzugt umfasst das Speichermedium eine Mischung aus flüssigem Wasser und Wassereis, gegebenenfalls weiterhin umfassend ein Mittel zur Senkung des Gefrierpunktes wie beispielsweise ein Glykol wie Ethylenglykol und/oder Propylenglykol. Alternativ arbeitet der zweite thermische Speicher als thermochemischer Wärmespeicher basierend auf festen oder flüssigen Sorbentien als Speichermedium. Ist das Speichermedium als Phasenwechselmedium ausgebildet, wird bevorzugt die bei einem Phasenwechsel, beispielsweise von einer festen zu einer flüssigen Phase oder umgekehrt, freiwerdende oder aufgenommene Energie zur schlagartigen Abgabe oder Speicherung von Energie eingesetzt.

Bevorzugt wird der Speicherkreislauf von einem Wärmemedium durchströmt, über welches thermische Energie zwischen dem Speicherkreislauf und dem ersten elektrischen Speicher und/oder dem zweiten thermischen Speicher übertragbar ist. Bevorzugt wird als Wärmemedium Wasser eingesetzt, bevorzugt unter Zusatz eines Glykols, insbesondere Ethylenglykol und/oder Propylenglykol zur Senkung des Gefrierpunktes..

Weiterhin wird eine Speichereinrichtung vorgeschlagen, die einen ersten elektrischen Speicher zum Speichern und Abgeben elektrischer Energie und einen zweiten thermischen Speicher zum Speichern und Abgeben thermischer Energie umfasst,
wobei der erste elektrische Speicher mit mindestens einem Netzwerk zur Übertragung und Verteilung elektrischer Energie zum Speichern elektrischer Energie aus dem Netzwerk im und Abgeben elektrischer Energie in das Netzwerk aus dem ersten elektrischen Speicher elektrisch verbindbar ist, wobei das Netzwerk ein Teil eines Verbundnetzes ist,
wobei der zweite thermische Speicher in einem Speicherkreislauf ausgebildet ist, der von einem Wärmemedium durchströmbar ist und thermisch mit dem ersten elektrischen Speicher zur steuerbaren Temperierung des ersten elektrischen Speichers verbindbar ist,
wobei eine Transfereinrichtung ausgebildet ist, durch die elektrische Energie in thermische Energie Abgabe an den Speicherkreislauf umwandelbar ist, die mit dem Netzwerk elektrisch und mit dem zweiten thermischen Speicher thermisch verbindbar ist,
umfassend eine Steuereinrichtung, geeignet und bestimmt zur Durchführung des erfindungsgemäßen Verfahrens.

Unter dem Begriff der steuerbaren Temperierung wird verstanden, dass der Betrieb des zweiten thermischen Speichers und insbesondere die Durchflussmenge des Wärmemediums durch einen entsprechenden Wärmeaustauscher zur Temperierung des ersten elektrischen Speichers, so gezielt steuerbar ist, dass der erste elektrische Speicher eine vorgebbare Temperatur oder eine Temperatur in einem vorgebbaren Temperaturbereich aufweist. Die Steuereinrichtung ist dabei insbesondere als eine entsprechende Software ausgebildet, die auf einem Computer abläuft.

Bevorzugt umfasst der zweite thermische Speicher als Speichermedium ein Phasenwechselmedium und/. Bevorzugt ist der erste elektrische Speicher mit einem ersten Wärmeaustauscher thermisch verbunden, der vom Wärmemedium im Speicherkreislauf durchströmbar ist. Bevorzugt umfasst die Transfereinrichtung einen Transferkreislauf, der von einem Transfermedium durchströmbar ist. Bevorzugt umfasst der Transferkreislauf einen elektrisch betreibbaren Kompressor zur Kompression des Transfermediums, einen Kondensator zur Kondensation des Transfermediums unter Wärmeabgabe und einen zweiten Wärmeaustauscher zur Übertragung von Wärme vom Wärmemedium im Speicherkreislauf auf das Transfermedium.

Bevorzugt ist ein dritter Wärmeaustauscher ausgebildet, durch den thermische Energie zwischen Wärmemedium und dem Speichermedium übertragbar ist. Diese Energieübertragung ist wechselweise und reversibel möglich.Die für das erfindungsgemäße Verfahren offenbarten Details und Vorteile sind auf die erfindungsgemäße Speichereinrichtung übertrag- und anwendbar und umgekehrt. Vorsorglich sei angemerkt, dass die hier verwendeten Zahlwörter ("erste", "zweite",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
Fig. 1: schematisch eine Speichereinrichtung;
Fig. 2: ein Beispiel einer als bekannt angenommenen Verfahrensführung bei der Speicherung und Abgabe von elektrischer Energie; und
Fig. 3: ein Beispiel der Durchführung des erfindungsgemäßen Verfahrens.

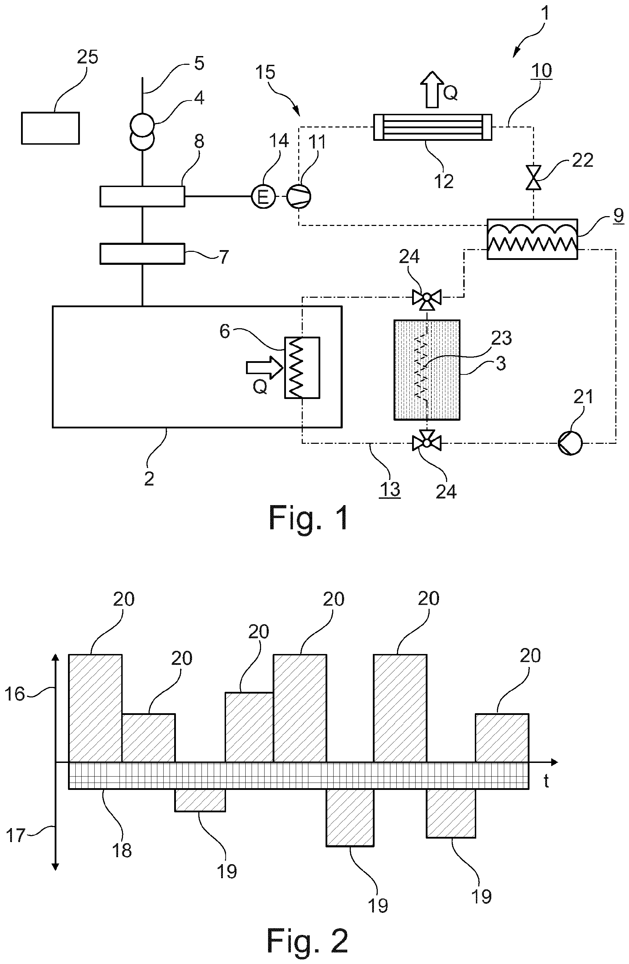

Fig. 1 zeigt schematisch eine Speichereinrichtung 1 mit einem ersten elektrischen Speicher 2 und einem zweiten thermischen Speicher 3. Im ersten elektrischen Speicher 2 ist elektrische Energie speicherbar und aus diesem entnehmbar. Der erste elektrische Speicher 2 umfasst insbesondere einen oder mehrere Akkumulatoren, insbesondere Akkumulatoren auf Blei-Basis und/oder auf Lithium-Ionen Basis. Im zweiten thermischen Speicher 3 ist thermische Energie speicherbar und aus diesem entnehmbar. Hierzu umfasst der zweite thermische Speicher 3 ein Speichermedium, insbesondere umfassend ein Phasenwechselmedium. Bevorzugt basiert die Speicherung von thermischer Energie im zweiten thermischen Speicher 3 und deren Abgabe auf einem Phasenübergang des Speichermediums. So wird beispielsweise thermische Energie im zweiten thermischen Speicher 3 gespeichert, in dem ein wasserhaltiges Speichermedium zumindest teilweise gefroren wird. Thermische Energie wird abgegeben, in dem das gefrorene Speichermedium auftaut. Insbesondere ist das Speichermedium eine Wasser-Eis-Mischung.

Die Speichereinrichtung 1 ist dabei über eine elektrische Schnittstelle 4 mit einem Netzwerk 5 zur Übertragung und Verteilung elektrischer Energie verbunden. Bei dem Netzwerk 5 handelt es sich bevorzugt um einen Teil eines Verbundnetzes. Das Netzwerk 5 ist ein Wechselspannungs-Netzwerk mit einer definierten Sollnetzfrequenz, die beispielsweise bei 50 Hz [Hertz] oder 60 Hz liegt. Bei der Sollnetzfrequenz handelt es sich um eine Sollfrequenz, die möglichst genau einzuhalten ist. Abweichungen der Netzfrequenz von der Sollnetzfrequenz können zu Problemen im Netzwerk 5 bis zum Ausfall zumindest von Teilen des Netzwerks 4 (einem so genannten Blackout) führen. Durch ein Überangebot von elektrischer Energie im Netzwerk 5 steigt die Netzfrequenz an, durch ein Unterangebot von elektrischer Energie sinkt die Netzfrequenz. Um die Netzfrequenz möglichst nahe an der Sollnetzfrequenz zu stabilisieren, ist es bekannt, in Zeiten eines Überangebots von elektrischer Energie für eine Speicherung von elektrischer Energie zu sorgen und dadurch die Netzfrequenz zu senken. Liegt ein Unterangebot von elektrischer Energie im Netzwerk 5 vor, ist es bekannt, elektrische Energie aus einem Speicher in das Netzwerk 5 abzugeben, um die Netzfrequenz zu erhöhen.

Elektrische Speicher wie der erste elektrische Speicher 2 sind in einem bestimmten Temperaturbereich zu betreiben, um einerseits eine effiziente Nutzung der gespeicherten elektrischen Energie zu gewährleisten und anderseits eine Schädigung des elektrischen Speichers zu verhindern. Die Temperatur des ersten elektrischen Speichers 2 wird dabei sowohl durch die Umgebungstemperatur und Umweltfaktoren wie beispielsweise Sonneneinstrahlung als auch durch die Entnahme von elektrischer Energie aus dem ersten elektrischen Speicher 2 beeinflusst. Deshalb ist eine Temperierung des ersten elektrischen Speichers 2 notwendig. Diese Temperierung wird durch ein Wärmemedium gewährleistet. Hierzu weist der erste elektrische Speicher 2 einen ersten Wärmeaustauscher 6 auf, der von dem Wärmemedium durchströmbar ist. Muss der erste elektrische Speicher 2 beispielsweise gekühlt werden, so nimmt das Wärmemedium im ersten Wärmeaustauscher 6 Wärme Q aus dem ersten elektrischen Speicher 2 auf und das Wärmemedium erwärmt sich und nimmt die Wärme Q auf. Das Wärmemedium wird dabei bevorzugt durch eine Pumpe 21 oder ähnliches im Kreis in einem Speicherkreislauf 13 geführt.

Die Speichereinrichtung 1 weist ferner eine Transfereinrichtung 15 auf, durch die elektrische Energie in thermische Energie zur Abgabe an das Wärmemedium und gegebenenfalls Speicherung im zweiten thermischen Speicher 3 umwandelbar ist, die mit dem Netzwerk 5 elektrisch und mit dem zweiten thermischen Speicher 3 thermisch verbindbar ist. Die Transfereinrichtung 15 umfasst einen zweiten Wärmeaustauscher 9 in einem Transferkreislauf 10, der von dem Wärmemedium durchströmt wird. Der zweite Wärmeaustauscher 9 ist Teil des Transferkreislaufs 10, der von einem Transfermedium durchströmbar ist und Teil des Speicherkreislaufs 13, der von dem Wärmemedium durchströmbar ist. Das Transfermedium stellt dabei ein übliches Kältemittel dar umfassend beispielsweise Ammoniak, Kohlenstoffdioxid, halogenierte und nichthalogenierte Fluorchlorkohlenwasserstoffe oder halogenierte und nichthalogenierte Flurkohlenwasserstoffe. Das Transfermedium wird, sofern thermische Energie an das Wärmemedium abgebeben und insbesondere im zweiten thermischen Speicher 3 gespeichert werden soll, über einen Kompressor 11 komprimiert und durchströmt einen Kondensator 12. Im Kondensator 12 kondensiert das Transfermedium und gibt dabei Wärme Q in Form von Kondensationswärme an die Umgebung ab. Das kondensierte Transfermedium wird zumindest teilweise über ein Expansionsventil 22 verdampft unter Aufnahme der Verdampfungsenthalpie, die zur schlagartigen Abkühlung des Transfermediums führt, und durchströmt den zweiten Wärmeaustauscher 9 und nimmt Wärme Q auf, die vom Wärmemedium im Speicherkreislauf 13 abgegeben wird. Der Kompressor 11 wird dabei über eine elektrische Maschine 14 betrieben, die mit elektrischer Energie betrieben wird, so dass durch die Transfereinrichtung 15 elektrische Energie in thermische Energie umwandelbar ist.

Das Wärmemedium im Speicherkreislauf 13 kann zur Abkühlung des Speichermediums im zweiten thermischen Speicher 3 genutzt werden. Hierzu ist ein dritter Wärmeaustauscher 23 im zweiten thermischen Speicher 3 ausgebildet. Über Ventile 24 kann dabei geregelt werden, ob und wie viel Wärmemedium in welcher Richtung durch den Speicherkreislauf 13 strömt. So kann der erste Wärmeaustauscher 6 mit Wärmemedium temperiert durch das Speichermedium im dritten Wärmeaustauscher 23 und/oder mit Wärmemedium temperiert durch das Transfermedium im zweiten Wärmeaustauscher 9 durchströmt werden. Gleichzeitig oder alternativ kann der dritte Wärmeaustauscher 23 mit Wärmemedium temperiert durch das Transfermedium im zweiten Wärmeaustauscher 9 durchströmt werden.

Der erste elektrische Speicher 2 ist über einen Wechselrichter 7 und ein Schaltmittel 8 mit der elektrischen Schnittstelle 4 verbindbar. Soll elektrische Energie aus dem Netzwerk 5 in dem ersten elektrischen Speicher 2 gespeichert werden, wird entsprechend über das Schaltmittel 8 und den Wechselrichter 7 die Wechselspannung aus dem Netzwerk 5 in Gleichspannung umgewandelt und dann dem ersten elektrischen Speicher 2 zur Speicherung zugeführt. Soll elektrische Energie aus dem ersten elektrischen Speicher 2 dem Netzwerk 5 zugeführt werden, wird die aus dem ersten elektrischen Speicher 2 am Wechselrichter 7 anliegende Gleichspannung in Wechselspannung der Netzfrequenz umgewandelt und über die elektrische Schnittstelle 4 in das Netzwerk 5 eingespeist.

Soll thermische Energie im zweiten thermischen Speicher 3 gespeichert werden, wird die elektrische Maschine 14 über die das Schaltmittel 8 mit der elektrischen Schnittstelle 4 und darüber mit dem Netzwerk 5 verbunden, so dass der zweite thermische Speicher 3 über den Einsatz von elektrischer Energie aus dem Netzwerk 5 geladen wird wie oben beschrieben.

Soll elektrische Energie aus dem ersten elektrischen Speicher 2 in das Netzwerk 5 abgegeben werden, wird der elektrische Speicher 2 entsprechend über die Schaltmittel 8 und die elektrische Schnittstelle 4 mit dem Netzwerk 5 verbunden. Parallel wird der zweite thermische Speicher 3 und/oder der zweite Wärmeaustauscher 9 so betrieben, dass Wärmemedium durch den Speicherkreislauf 13 und den ersten Wärmeaustauscher 6 gefördert wird.

Der Status des Netzwerks 5 lässt sich durch einen Netzstatus beschreiben, der zumindest aus der Netzfrequenz in Relation zur Sollnetzfrequenz bestimmbar ist. Liegt beispielsweise die Netzfrequenz oberhalb der Sollnetzfrequenz, so kann basierend auf dem Netzstatus festgelegt werden, dass elektrische Energie aus dem Netzwerk 5 in der Speichereinrichtung 1 zu speichern ist. Dies kann sowohl durch Speicherung von elektrischer Energie im ersten elektrischen Speicher 2 und/oder durch Speicherung von thermischer Energie im zweiten thermischen Speicher 3 erfolgen. Liegt die Netzfrequenz unter der Sollnetzfrequenz, so kann basierend auf dem Netzstatus festgelegt werden, dass elektrische Energie in das Netzwerk 5 aus der Speichereinrichtung 1 abzugeben ist.

Der Netzstatus wird bevorzugt festgelegt basierend zumindest auf der Netzfrequenz und der Sollnetzfrequenz. Liegt als Netzstatus beispielsweise ein Abgabestatus an, so liegt ein Überangebot an elektrischer Energie im Netzwerk 5 vor, so dass elektrische Energie im ersten elektrischen Speicher 2 gespeichert und/oder in der Transfereinrichtung 15 in thermische Energie umgewandelt und im zweiten thermischen Speicher 3 gespeichert werden kann. Liegt ein Einspeisestatus vor, so liegt eine Unterversorgung mit elektrischer Energie im Netzwerk 5 vor, so dass elektrische Energie aus dem elektrischen Speicher 2 entnommen und in das Netzwerk 5 eingespeist wird. Bei der Bestimmung des Netzstatus kann weiterhin bevorzugt auf Prognosen zurückgegriffen werden, die beispielsweise historische Verbrauchsdaten für elektrische Energie im Netzwerk 5 berücksichtigen oder Prognosedaten, die sich auf die Bereitstellung von elektrischer Energie im Netzwerk 5 beziehen. Dies können beispielsweise Wetterprognosen sein, die eine Abschätzung der durch Windkraftanlagen und/oder Fotovoltaik-Anlagen im Netzwerk 5 bereitgestellte elektrische Energie erlauben.

Weiterhin umfasst die Speichereinrichtung 1 eine Steuereinrichtung 25, die nur schematisch eingezeichnet ist und die über nicht gezeigte Steuerverbindungen mit weiteren Elementen der Speichereinrichtung 1 verbunden ist, insbesondere mit dem Schaltmittel 8, der elektrischen Maschine 14, der Pumpe 21, dem Expansionsventil 22 und den Ventilen 24. Weiterhin weist die Steuereinrichtung 25 eine Schnittstelle auf, über die Daten beispielsweise betreffend oder umfassend den Netzstatus empfangen und gesendet werden können. Die Steuereinrichtung 25 ist ferner mit Sensoren verbindbar, über die beispielsweise die Temperatur im ersten elektrischen Speicher 2, die Umgebungstemperatur etc. bestimmbar ist.

Fig. 2 zeigt schematisch eine als bekannt angenommene Verfahrensführung, bei der ein elektrischer Speicher dauerhaft mit elektrischer Leistung aus einem elektrischen Netzwerk gekühlt wird. Fig. 2 zeigt die Energieeinspeisung 16 ins Netzwerk und den Energiebezug aus dem Netzwerk gegen die Zeit t. Aus dem elektrischen Netzwerk 5 wird dauerhaft eine Kühlleistung 18 bezogen, mit der der entsprechende elektrische Speicher gekühlt wird. Je nach Netzstatus erfolgt eine Energiespeicherung 19 im elektrischen Speicher oder eine Energieabgabe 20 aus dem elektrischen Speicher in das elektrische Netzwerk.

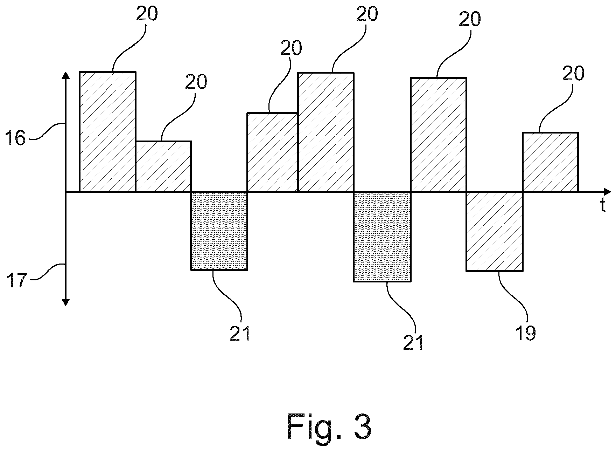

Fig. 3 zeigt im Unterschied dazu eine erfindungsgemäße Verfahrensführung mit einer Speichereinrichtung 1 wie oben offenbart. Fig. 3 zeigt auch hier die Energieeinspeisung 16 aus der Speichereinrichtung 1 in das Netzwerk 5 und den Energiebezug 17 aus dem Netzwerk 5 in die Speichereinrichtung. Im Unterschied zu Fig. 2 entfällt die dauerhafte Kühlleistung 18 vollständig. Neben der Energiespeicherung 19 im ersten elektrischen Speicher 2 und der Energieabgabe 20 aus dem ersten elektrischen Speicher 2, die wie beschrieben abhängig vom Netzstatus erfolgt, erfolgt bei gegebenem Netzstatus eine Energieabnahme aus dem Netzwerk 5 zur thermischen Speicherung 21 im zweiten thermischen Speicher 3.

Die Speichereinrichtung 1 umfasst einen ersten elektrischen Speicher 2, beispielsweise umfassend Akkumulatoren, und einen zweiten thermischen Speicher 3, in dem thermische Energie in einem Speichermedium, beispielweise eine Wasser-Wassereis-Mischung, gespeichert wird. Der zweite thermische Speicher 3 ist Teil eines Speicherkreislaufs 13, der von einem Wärmemedium durchströmbar ist. Durch das Wärmemedium erfolgt eine Temperierung des ersten elektrischen Speichers 2, in dem ein erster Wärmeaustauscher 6 im ersten elektrischen Speicher 2 vom Wärmemedium durchströmt wird. Das Wärmemedium im Speicherkreislauf 13 ist temperierbar und dadurch der zweite thermische Speicher 3 aufladbar durch Umwandlung von elektrischer Energie in thermische Energie in einer Transfereinrichtung 15. Dies erfolgt bevorzugt über ein übliches Transfermedium, welches über einen Kompressor 11 und einen Kondensator 12 kondensiert wird und dann nach Entspannung in einem zweiten Wärmeaustauscher 9 im Wärmeaustausch mit dem Wärmemedium des zweiten thermischen Speichers 3 steht.

## Patentansprüche

1. Verfahren zum Betrieb einer Speichereinrichtung (1), die einen ersten elektrischen Speicher (2) zum Speichern und Abgeben elektrischer Energie und einen zweiten thermischen Speicher (3) in einem durchströmbaren Speicherkreislauf (13) zum Speichern und Abgeben thermischer Energie umfasst,
wobei der erste elektrische Speicher (2) mit mindestens einem Netzwerk (5) zur Übertragung und Verteilung elektrischer Energie zum Speichern elektrischer Energie aus dem Netzwerk (5) und zum Abgeben elektrischer Energie in das Netzwerk (5) aus dem ersten elektrischen Speicher (2) elektrisch verbindbar ist,
wobei das Netzwerk (5) einen Netzstatus aufweist,
wobei das Netzwerk ein Teil eines Verbundnetzes ist,
wobei in Abhängigkeit vom Netzstatus zumindest zeitweise elektrische Energie aus dem Netzwerk (5) in dem ersten elektrischen Speicher (2) gespeichert oder diesem entnommen und in das Netzwerk (5) eingespeist wird;
in Abhängigkeit vom Netzstatus elektrische Energie aus dem Netzwerk (5) oder dem ersten elektrischen Speicher (2) entnommen, in thermische Energie umgewandelt und diese über den Speicherkreislauf (13) im zweiten thermischen Speicher (3) gespeichert wird; und
in Abhängigkeit zumindest von einer Temperatur des ersten elektrischen Speichers (2) dieser beheizt oder gekühlt wird und die dafür notwendige thermische Energie
aus dem zweiten thermischen Speicher (3) entnommen oder in diesem gespeichert wird.

2. Verfahren nach Anspruch 1, bei dem das Netzwerk (5) ein Wechselspannungsnetzwerk umfasst und der Netzstatus zumindest basierend auf der Netzfrequenz im Netzwerk (5) festgelegt wird.

3. Verfahren nach einem der vorhergehenden Ansprüche, bei dem bei der Entscheidung, ob elektrische Energie aus dem ersten elektrischen Speicher (2) entnommen und in das Netzwerk (5) eingespeist wird oder aus dem Netzwerk (5) entnommen und im ersten elektrischen Speicher (2) gespeichert wird, ein elektrisches Ladezustandsprofil des ersten elektrischen Speichers (2) berücksichtigt wird.

4. Verfahren nach einem der vorhergehenden Ansprüche, bei dem bei der Entscheidung, ob elektrische Energie aus dem Netzwerk (5) entnommen, in thermische Energie umgewandelt und diese im zweiten thermischen Speicher (3) gespeichert wird oder ob die erzeugte thermische Energie direkt zur Temperierung des ersten elektrischen Speichers (2) eingesetzt, ein thermischer Ladezustand des zweiten thermischen Speichers (3) berücksichtigt wird.

5. Verfahren nach einem der vorhergehenden Ansprüche, bei dem der zweite thermische Speicher (3) als Speichermedium ein Phasenwechselmedium, insbesondere umfassend auf Wasser, Paraffinen, Salzhydraten und/oder ionischen Flüssigkeiten, umfasst.

6. Verfahren nach einem der vorhergehenden Ansprüche, bei dem der Speicherkreislauf (13) von einem Wärmemedium durchströmt wird, über welches thermische Energie zwischen dem Speicherkreislauf (13) und dem ersten elektrischen Speicher (2) und/oder dem zweiten thermischen Speicher (3) übertragbar ist.

7. Speichereinrichtung (1), die einen ersten elektrischen Speicher (2) zum Speichern und Abgeben elektrischer Energie und einen zweiten thermischen Speicher (3) zum Speichern und Abgeben thermischer Energie umfasst,
wobei der erste elektrische Speicher (2) mit mindestens einem Netzwerk (5) zur Übertragung und Verteilung elektrischer Energie zum Speichern elektrischer Energie aus dem Netzwerk (5) im und Abgeben elektrischer Energie in das Netzwerk (5) aus dem ersten elektrischen Speicher (2) elektrisch verbindbar ist,
wobei das Netzwerk ein Teil eines Verbundnetzes ist,
wobei der zweite thermische Speicher (3) in einem Speicherkreislauf (13) ausgebildet ist, der von einem Wärmemedium durchströmbar ist und thermisch mit dem ersten elektrischen Speicher (2) zur steuerbaren Temperierung des ersten elektrischen Speichers (2) verbindbar ist,
wobei eine Transfereinrichtung (15) ausgebildet ist, durch die elektrische Energie in thermische Energie zur Abgabe an den Speicherkreislauf (13) umwandelbar ist, die mit dem Netzwerk (5) elektrisch und mit dem zweiten thermischen Speicher (3) thermisch verbindbar ist,
umfassend eine Steuereinrichtung (25), geeignet und bestimmt zur Durchführung des Verfahrens nach einem der vorhergehenden Ansprüche.

8. Speichereinrichtung (1) nach Anspruch 7, bei dem der zweite thermische Speicher (3) als Speichermedium ein Phasenwechselmedium umfasst.

9. Speichereinrichtung (1) nach Anspruch 7 oder 8, bei dem der erste elektrische Speicher (2) mit einem ersten Wärmeaustauscher (6) thermisch verbunden ist, der vom Wärmemedium im Speicherkreislauf (13) durchströmbar ist.

10. Speichereinrichtung (1) nach einem der Ansprüche 7 bis 9, bei dem die Transfereinrichtung (15) einen Transferkreislauf (10) umfasst, der von einem Transfermedium durchströmbar ist.

11. Speichereinrichtung (1) nach Anspruch 10, bei dem der Transferkreislauf (10) einen elektrisch betreibbaren Kompressor (11) zur Kompression des Transfermediums, einen Kondensator (12) zur Kondensation des Transfermediums unter Wärmeabgabe, und einen zweiten Wärmeaustauscher (9) zur Übertragung von Wärme vom Wärmemedium im Speicherkreislauf (13) auf das Transfermedium umfasst.

12. Speichereinrichtung (1) nach einem der Ansprüche 7 bis 11, bei dem ein dritter Wärmeaustauscher (23) ausgebildet ist, durch den thermische Energie zwischen Wärmemedium und dem Speichermedium übertragbar ist.

## Claims

1. Method for operating a storage device (1) comprising a first electrical store (2) for storing and outputting electrical energy and a second thermal store (3) in a flow-through storage circuit (13) for storing and outputting thermal energy,
wherein the first electrical store (2) can be electrically connected to at least one network (5) for transmitting and distributing electrical energy for storing electrical energy from the network (5) and for outputting electrical energy to the network (5) from the first electrical store (2),
wherein the network (5) has a network status,
wherein the network is part of an interconnection network,
wherein, depending on the network status, at least temporarily, electrical energy from the network (5) is stored in the first electrical store (2) or is drawn therefrom and fed into the network (5);
depending on the network status, electrical energy is drawn from the network (5) or the first electrical store (2), converted into thermal energy and this is stored in the second thermal store (3) via the storage circuit (13); and
the first electrical store (2) is heated or cooled depending on at least one temperature thereof and the thermal energy required for this is drawn from the second thermal store (3) or is stored therein.

2. Method according to Claim 1, in which the network (5) comprises an AC voltage network and the network status is defined at least based on the network frequency in the network (5).

3. Method according to either of the preceding claims, in which an electrical state-of-charge profile of the first electrical store (2) is taken into account in the decision regarding whether electrical energy is drawn from the first electrical store (2) and fed into the network (5) or drawn from the network (5) and stored in the first electrical store (2).

4. Method according to any one of the preceding claims, in which a thermal state of charge of the second thermal store (3) is taken into account in the decision regarding whether electrical energy is drawn from the network (5), converted into thermal energy and this is stored in the second thermal store (3) or whether the thermal energy generated is used directly to control the temperature of the first electrical store (2).

5. Method according to any one of the preceding claims, in which the second thermal store (3) comprises a phase-change medium, in particular comprising water, paraffins, salt hydrates and/or ionic liquids, as the storage medium.

6. Method according to any one of the preceding claims, in which a heating medium flows through the storage circuit (13), the heating medium being used to transfer thermal energy between the storage circuit (13) and the first electrical store (2) and/or the second thermal store (3).

7. Storage device (1) comprising a first electrical store (2) for storing and outputting electrical energy and a second thermal store (3) for storing and outputting thermal energy,
wherein the first electrical store (2) can be electrically connected to at least one network (5) for transmitting and distributing electrical energy for storing electrical energy from the network (5) and for outputting electrical energy to the network (5) from the first electrical store (2),
wherein the network is part of an interconnection network,
wherein the second thermal store (3) is formed in a storage circuit (13) through which a heating medium can flow and which can be thermally connected to the first electrical store (2) for controlling the temperature of the first electrical store (2) in a controllable manner,
wherein a transfer device (15) is formed, by way of which electrical energy can be converted into thermal energy for outputting to the storage circuit (13), the transfer device being able to be connected electrically to the network (5) and thermally to the second thermal store (3),
comprising a control device (25), suitable and intended for carrying out the method according to any one of the preceding claims.

8. Storage device (1) according to Claim 7, in which the second thermal store (3) comprises a phase-change medium as the storage medium.

9. Storage device (1) according to Claim 7 or 8, in which the first electrical store (2) is thermally connected to a first heat exchanger (6) through which heating medium in the storage circuit (13) can flow.

10. Storage device (1) according to any one of Claims 7 to 9, in which the transfer device (15) comprises a transfer circuit (10) through which a transfer medium can flow.

11. Storage device (1) according to Claim 10, in which the transfer circuit (10) comprises an electrically operable compressor (11) for compressing the transfer medium, a condenser (12) for condensing the transfer medium while releasing heat, and a second heat exchanger (9) for transferring heat from the heating medium in the storage circuit (13) to the transfer medium.

12. Storage device (1) according to any one of Claims 7 to 11, in which a third heat exchanger (23) is formed, by way of which thermal energy can be transferred between the heating medium and the storage medium.

## Revendications

1. Procédé pour faire fonctionner un dispositif d'accumulation (1), qui comporte un premier accumulateur électrique (2) destiné à stocker et à délivrer de l'énergie électrique et un deuxième accumulateur thermique (3) dans un circuit d'accumulateur (13) pouvant être traversé par un flux afin de stocker et délivrer de l'énergie thermique,
le premier accumulateur électrique (2) pouvant être relié électriquement à au moins un réseau (5) destiné à la transmission et à la distribution d'énergie électrique en vue de stocker de l'énergie électrique depuis le réseau (5) et de délivrer de l'énergie électrique dans le réseau (5) depuis le premier accumulateur électrique (2),
le réseau (5) présentant un statut de réseau,
le réseau étant une partie d'un réseau interconnecté en fonction du statut de réseau, de l'énergie électrique issue du réseau (5) étant, au moins temporairement, stockée dans le premier accumulateur électrique (2) ou prélevée de celui-ci et injectée dans le réseau (5) ;
en fonction du statut de réseau, de l'énergie électrique est prélevée du réseau (5) ou du premier accumulateur électrique (2), convertie en énergie thermique et celle-ci est stockée dans le deuxième accumulateur thermique (3) par le biais du circuit d'accumulateur (13) ; et
en fonction d'au moins une température du premier accumulateur électrique (2), celui-ci est chauffé ou refroidi et l'énergie thermique nécessaire à cet effet est prélevée du deuxième accumulateur thermique (3) ou stockée dans celui-ci.

2. Procédé selon la revendication 1, avec lequel le réseau (5) comporte un réseau à tension alternative et le statut de réseau est spécifié au moins en se basant sur la fréquence de réseau dans le réseau (5).

3. Procédé selon l'une des revendications précédentes, avec lequel un profil d'état de charge électrique du premier accumulateur électrique (2) est pris en considération lors de la décision de prélever de l'énergie électrique du premier accumulateur électrique (2) et de l'injecter dans le réseau (5) ou la prélever du réseau (5) et l'injecter dans le premier accumulateur électrique (2).

4. Procédé selon l'une des revendications précédentes, avec lequel un état de charge thermique du deuxième accumulateur thermique (3) est pris en considération lors de la décision de prélever de l'énergie électrique du réseau (5), la convertir en énergie thermique et stocker celle-ci dans le deuxième accumulateur électrique (2) ou d'utiliser l'énergie thermique générée directement pour la régulation de la température du deuxième accumulateur thermique (3).

5. Procédé selon l'une des revendications précédentes, avec lequel le deuxième accumulateur thermique (3) comprend, comme moyen de stockage, un fluide à changement de phase, notamment comprenant de l'eau, des paraffines, des hydrates de sel et/ou des liquides ioniques.

6. Procédé selon l'une des revendications précédentes, avec lequel le circuit d'accumulateur (13) est traversé par un flux de fluide calorifique, par le biais duquel de l'énergie thermique peut être transférée entre le circuit d'accumulateur (13) et le premier accumulateur électrique (2) et/ou le deuxième accumulateur thermique (3) .

7. Dispositif d'accumulation (1), qui comporte un premier accumulateur électrique (2) destiné à stocker et à délivrer de l'énergie électrique et un deuxième accumulateur thermique (3) destiné à stocker et à délivrer de l'énergie thermique,
le premier accumulateur électrique (2) pouvant être relié électriquement à au moins un réseau (5) destiné à la transmission et à la distribution d'énergie électrique en vue de stocker de l'énergie électrique depuis le réseau (5) et de délivrer de l'énergie électrique dans le réseau (5) depuis le premier accumulateur électrique (2),
le réseau étant une partie d'un réseau interconnecté le deuxième accumulateur thermique (3) étant formé dans un circuit d'accumulateur (13), lequel peut être traversé par un flux de fluide calorifique et peut être relié thermiquement au premier accumulateur électrique (2) pour la régulation de température commandable du premier accumulateur électrique (2),
un dispositif de transfert (15) étant formé, par lequel l'énergie électrique peut être convertie en énergie thermique en vue d'être délivrée au circuit d'accumulateur (13), lequel peut être relié électriquement au réseau (5) et thermiquement au deuxième accumulateur thermique (3),
comprenant un dispositif de commande (25), adapté et déterminé pour mettre en œuvre le procédé selon l'une des revendications précédentes.

8. Dispositif d'accumulation (1) selon la revendication 7, avec lequel le deuxième accumulateur thermique (3) comprend un fluide à changement de phase en tant que fluide de stockage.

9. Dispositif d'accumulation (1) selon la revendication 7 ou 8, avec lequel le premier accumulateur électrique (2) est relié thermiquement à un premier échangeur de chaleur (6), lequel peut être traversé par le fluide calorifique dans le circuit d'accumulateur (13).

10. Dispositif d'accumulation (1) selon l'une des revendications 7 à 9, avec lequel le dispositif de transfert (15) comporte un circuit de transfert (10) qui peut être traversé par un fluide de transfert.

11. Dispositif d'accumulation (1) selon la revendication 10, avec lequel le circuit de transfert (10) comporte un compresseur (11) pouvant fonctionner à l'électricité, destiné à la compression du fluide de transfert, un condenseur (12) destiné à la condensation du fluide de transfert en délivrant de la chaleur, et un deuxième échangeur de chaleur (9) destiné à transmettre de la chaleur du fluide calorifique dans le circuit d'accumulateur (13) au fluide de transfert.

12. Dispositif d'accumulation (1) selon l'une des revendications 7 à 11, avec lequel un troisième échangeur de chaleur (23) est formé, par lequel l'énergie thermique peut être transmise entre le fluide calorifique et le fluide de stockage.
